(19) Europäisches Patentamt
European Patent Office
Office européen des brevets

(11) Veröffentlichungsnummer: **0 089 603**
**B1**

(12) # EUROPÄISCHE PATENTSCHRIFT

(45) Veröffentlichungstag der Patentschrift: **04.06.86**

(51) Int. Cl.⁴: **G 03 G 5/05,** G 03 G 5/09, G 03 G 13/26, H 05 K 3/00, C 08 G 18/81

(21) Anmeldenummer: **83102536.6**

(22) Anmeldetag: **15.03.83**

(54) **Elektrophotographisches Aufzeichnungsmaterial.**

(30) Priorität: **23.03.82 DE 3210577**

(43) Veröffentlichungstag der Anmeldung: **28.09.83 Patentblatt 83/39**

(45) Bekanntmachung des Hinweises auf die Patenterteilung: **04.06.86 Patentblatt 86/23**

(84) Benannte Vertragsstaaten: **DE FR GB NL**

(56) Entgegenhaltungen: ***Keine***

(73) Patentinhaber: **HOECHST AKTIENGESELLSCHAFT, Postfach 80 03 20, D-6230 Frankfurt am Main 80 (DE)**

(72) Erfinder: **Dössel, Karl-Friedrich, Dr., Schenkendorf-Strasse 2, D-6200 Wiesbaden (DE)**

EP 0 089 603 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein elektrophotographisches Aufzeichnungsmaterial zur Herstellung einer Druckform oder einer gedruckten Schaltung aus einem Schichtträger und einer photoleitfähigen Schicht aus Photoleiter, Sensibilisator und/oder Aktivator, gegebenenfalls weiteren, die Oberflächenstruktur und/oder Haftung verbessernden Zusätzen sowie einem hochmolekularen in alkalisch wässriger oder alkoholischer Lösung löslichen Bindemittel.

Es ist bekannt, zur Herstellung von Druckformen oder gedruckten Schaltungen auf elektrophotographischem Wege photoleitfähige Schichten aus monomeren oder polymeren organischen Photoleitern, Sensibilisatoren und/oder Aktivatoren sowie alkalilöslichen Bindemitteln auf entsprechenden Schichtträgern einzusetzen (DE-PS 11 17 391 entsprechend GB-PS 944 126). Die photoleitfähigen Schichten werden durch geeignete Beschichtungstechniken aus der Lösung oder durch Laminieren, entsprechend DE-OS 30 24 772, auf einen geeigneten metallischen oder metallisierten Schichtträger aufgebracht. Das hochmolekulare Bindemittel enthält dabei alkalilöslichmachende Gruppen wie Säureanhydrid-, Carboxyl-, Phenol-, Sulfonsäure-, Sulfonamid- oder Sulfonimid-Gruppen (DE-PS 23 22 047 entsprechend US-PS 4 066 453). Mischpolymerisate aus Styrol und Maleinsäureanhydrid, Phenolharze oder Mischpolymerisate aus Styrol, Methacryl- oder Acrylsäure und Methacrylsäureester werden als Bindemittel besonders erwähnt.

Zur Herstellung von Druckformen oder gedruckten Schaltungen wird das elektrophotographische Aufzeichnungsmaterial elektrostatisch aufgeladen, belichtet oder bildmässig elektrostatisch aufgeladen und mit einem Toner eines Trokken- oder Flüssigentwicklers entwickelt. Man kann das entstandene Tonerbild durch Erwärmen auf 100 bis 250 °C fixieren und behandelt dann die Schicht zur Entschichtung mit einer alkalischwässrigen oder alkoholischen Lösung, wodurch die nicht vom Toner bedeckten Stellen weggelöst werden. Man erhält schliesslich eine Flachdruckform oder eine Maske für eine gedruckte Schaltung.

Es sind auch filmbildende saure Polmerisate bekannt (US-PS 3 422 075), die man durch Reaktion eines Hydroxy- oder Aminogruppen tragenden Polymers mit einem Monosulfonylisocyanat erhält. Sie sind alkalilöslich und können als Film oder Folie oder als Beschichtungsmaterial, insbesondere anstelle harzartiger Verbindungen mit Carboxygruppen verwendet werden. Ihre Verwendung bei der Herstellung photographischer Schichten ist bekannt.

Es ist auch bekannt (DE-AS 20 53 363 entsprechend US-PS 3 732 106), in Gemischen für Photopolymerschichten ein Umsetzungsprodukt aus einem Sulfonylisocyanat und einem Vinylalkoholpolymerisat, Epoxyharz mit freien OH-Gruppen, Cellulosepartialester oder -ether, Polyamid oder Mischpolymerisate dieser Substanzen einzusetzen. Das Gemisch kann in Form einer Lösung oder Dispersion als sogenannter Kopierlack, der auf einem individuellen Träger aufgebracht und nach Trocknen gedruckter Schaltungen dienen oder es kann in Form einer festen, auf einem Träger befindlichen Schicht als lichtempfindliches Material zur Herstellung von Druckformen, insbesondere von Flachdruckplatten, dienen.

Es ist auch schon ein lichthärtbares Gemisch vorgeschlagen worden (DE-OS 30 36 077), das als lichtempfindliche Verbindung ein Diazoniumsalz-Polykondensationsprodukt oder eine organische Azidoverbindung und als Bindemittel ein hochmolekulares Polymeres mit seitenständigen Sulfonylurethangruppen, das in wässrig-alkalischer Lösung löslich oder mindestens quellbar ist, enthält, wobei das Polymer seitenständig Alkenylsulfonyl- oder Cycloalkenylsulfonylurethangruppen besitzt.

Bei der Herstellung einer gedruckten Schaltung auf elektrophotographischem Wege nach bekannten Verfahren besteht der Nachteil darin, dass man die Schichten mit dem alkalilöslich machenden Bindemittel entweder gar nicht oder nur bei relativ hohen Temperaturen auf eine Kupferkaschierte Leiterplatte aufbringen bzw. laminieren kann. Die hohen Temperaturen erschweren den Laminierprozess und führen leicht zu einer Schädigung der meist thermoempfindlichen Photoleitersubstanzen, Sensibilisatoren und Aktivatoren. Die photoleitfähige Schicht verliert dadurch an Photoempfindlichkeit. Ein anderer Nachteil liegt darin, dass die für den elektrophotographischen Prozess verwendeten Schichten mit den bekannten alkalilöslichen Bindemitteln in Schichtdicken von etwa 30 µm Stärke, wie sie für die Herstellung von Leiterplatten nötig sind, nicht mehr flexibel genug sind. Man muss deshalb diese Schichten mit äusserster Vorsicht handhaben, da schon ein leichtes Knicken zu einer unerwünschten Rissbildung führt und die Schicht dadurch unbrauchbar wird.

Bei der Herstellung einer Druckform oder einer gedruckten Schaltung auf elektrophotographischem Wege müssen der Entschichterlösung zur Erhöhung der Prozessgeschwindigkeit Lösungsmittel zugesetzt werden. Diese lösungsmittelhaltigen Entschichterlösungen gelangen nach Gebrauch in das Abwasser und stellen eine hohe Belastung für die Umwelt dar.

Ein weiterer Nachteil der bekannten alkalilöslichen Bindemittel ist die besonders bei grossen Schichtdicken auftretende Verschlechterung der elektrophotographischen Empfindlichkeit.

Es war deshalb Aufgabe der vorliegenden Erfindung ein elektrophotographisches Aufzeichnungsmaterial für die Herstellung einer Druckform oder einer gedruckten Schaltung zu schaffen, dessen photoleitfähige Schicht gut laminierbar und flexibel ist, eine gute Aufladbarkeit besitzt und dennoch selbst bei relativ grossen Schichtdicken eine hohe Empfindlichkeit bietet und

leicht und schnell in einem möglichst umweltfreundlichen, wässrig-alkalischen Entschichter löslich ist.

Die Lösung geht von einem Aufzeichnungsmaterial der eingangs genannten Art aus und sie ist dadurch gekennzeichnet, dass die photoleitfähige Schicht als Bindemittel ein Reaktionsprodukt aus einem Sulfonylisocyanat der allgemeinen Formel $R-SO_2-NCO$ mit R gleich Alkenyl mit bis zu 4 Kohlenstoffatomen oder Phenyl, das durch Alkyl mit bis zu 3 Kohlenstoffatomen substituiert sein kann, und einem Hydroxylgruppen tragenden Polymer im Molverhältnis im Bereich von (0,5 bis 1) : 1 enthält. In bevorzugter Ausführungsform enthält die photoleitfähige Schicht als Bindemittel ein Reaktionsprodukt aus Propenylsulfonylisocyanat oder p-Toluolsulfonylisocyanat und einem Vinylalkoholmischpolymerisat.

Das erfindungsgemässe Bindemittel, das ein Sulfonylurethan darstellt, hat in Abhängigkeit von der eingesetzten Hydroxylkomponente einen Erweichungspunkt zwischen 60 und 160 °C. Da es sich bei der Herstellung des Sulfonylurethans um eine Additions- und nicht um eine Polymerisationsreaktion handelt, wird das Molekulargewicht des erfindungsgemässen Bindemittels durch die eingesetzte Hydroxylkomponente bestimmt. Nimmt man die Viskosität einer 5%igen Lösung der Hydroxylkomponente in n-Butanol bei 20 °C als Mass für das Molekulargewicht, so liegt diese im Bereich zwischen 10 und 300 mPa · s. Für die Verwendung zur Herstellung von Druckplatten werden dabei Verbindungen mit einem Molekulargewicht über 50 000 bevorzugt, während das Molekulargewicht bei der Verwendung der Verbindungen zur Herstellung von gedruckten Schaltungen eher unter 50 000 liegt.

Der Anteil an reaktionsfähigen Hydroxylgruppen liegt bei dem erfindungsgemässen Bindemittel über etwa 3% und typischerweise zwischen 5 und 8%. Der Gehalt an nicht umgesetzten Vinylalkoholeinheiten bei Einsatz eines Polyvinylacetals liegt zwischen 10 und 30%.

Zur Herstellung des erfindungsgemäss verwendeten Bindemittels löst man die umzusetzende Hydroxylkomponente in einem geeigneten Lösungsmittel wie Tetrahydrofuran und fügt das Sulfonylisocyanat als solches oder in Lösung bei Raumtemperatur zu. Nach der Zugabe des Sulfonylisocyanats wird eine leichte Erwärmung beobachtet. Man rührt noch zwei Stunden nach und verwendet die so erhaltene Lösung des Sulfonylurethans entweder ohne weitere Reinigung oder nach Ausfällung des Polymeren in Wasser.

Der Anteil des erfindungsgemässen Bindemittels in der photoleitfähigen Schicht beträgt im allgemeinen 80 bis 40 Gew.-%. Bevorzugt werden 65 bis 55 Gew.-% eingesetzt.

Durch die Erfindung wird erreicht, dass ein elektrophotographisches Aufzeichnungsmaterial zur Herstellung einer Druckform oder einer gedruckten Schaltung zur Verfügung gestellt werden kann, das sowohl in dünner Schicht höchsten Ansprüchen wie der punktgenauen Rasterwiedergabe und hoher Druckauflage entspricht, als auch in relativ dicker Schicht aufgrund seiner guten Flexibilität und Laminierfähigkeit, seiner leichten Entschichtbarkeit und der hohen Empfindlichkeit der damit hergestellten photoleitfähigen Schichten Vorteile hat.

Es wurde überraschend gefunden, dass das beschriebene, in Kombination mit Photopolymeren oder Diazoverbindungen als photovernetzend bekannte Bindemittel in Kombination mit einer Photoleitersubstanz als lichtempfindliches Material für die Elektrophotographie dann geeignet ist, wenn das Molverhältnis zwischen Sulfonylisocyanat und Hydroxylgruppen tragendem Polymer zwischen (0,5 bis 1) : 1 beträgt. Als besonderer Vorteil wurde eine bisher nicht bekannte gute Laminierfähigkeit gefunden, die den Einsatz dieses Materials zur Herstellung von gedruckten Schaltungen ermöglicht.

Im Gegensatz zu der aus der DE-OS 30 36 077 bekannten Variationsbreite bei den Molverhältnissen zwischen Hydroxylgruppen tragendem Polymer und dem Sulfonylisocyanat müssen bei Anwendung für die Elektrophotographie bestimmte Molverhältnisse dieser beiden Komponenten eingehalten werden. So führen die dort beschriebenen Bindemittel zu elektrophotographischen Schichten mit sehr niedriger Aufladbarkeit und sehr hoher Dunkelleitfähigkeit oder bei der Anwendung in 30 µm dicken Schichten zu einer sehr langsamen Entschichtbarkeit.

Erfindungsgemäss wird besonders ein Molverhältnis zwischen Hydroxylgruppen tragendem Polymer und Sulfonylisocyanat im Bereich von etwa 1 : 1 bis 1 : 0,8 eingehalten. Aufzeichnungsmaterialien, die das Bindemittel in diesen Verhältnissen besitzen, zeigen bei guter Aufladbarkeit und geringer Dunkelleitfähigkeit eine sehr gute Entschichtbarkeit unter Beibehaltung aller anderen geforderten physikalischen Eigenschaften.

Als Träger für die photoleitfähige Schicht dienen zur Herstellung einer Druckform alle für diesen Zweck bekannten Materialien, insbesondere oberflächlich mechanisch oder elektrochemisch aufgerauhte, eloxierte und gegebenenfalls mit Polyvinylphosphonsäure behandelte Aluminiumfolien. Als Träger für die photoleitfähige Schicht zur Herstellung gedruckter Schaltungen oder geätzter Formteile dienen insbesondere kupferkaschierte Epoxydplatten, kupferkaschierte Polyimidfolien oder dünne Metallfolien. Die photoleitfähige Schicht kann auch auf einen Zwischenträger aus Polyesterfolie aufgebracht sein.

Die für die photoleitfähige Schicht verwendeten Photoleiter sind bekannt. Hierzu geeignet sind solche, wie sie aus der DE-PS 11 20 875 entsprechend US-PS 2 257 203 hervorgehen, insbesondere substituierte Vinyloxazole wie 2-Vinyl -4-(2'-chlorphenyl) -5- (4''-diethylaminophenyl)-oxazol. Geeignete Photoleiter sind weiterhin zum Beispiel Triphenylaminderivate, höher kondensierte aromatische Verbindungen, benzokondensierte Heterocyclen, Pyrazolin- oder Imidazolderivate. Hierher gehören auch Triazol- sowie Oxdiazolderivate, wie sie aus der DE-PS 10 60 260 entsprechend US-PS 3 112 197 bzw. aus DE-PS

10 58 836 (entsprechend US-PS 3 189 447) bekannt sind. Hier ist insbesondere 2,5-Bis-(4'-diethylaminophenyl)-oxdiazol-1,3,4 geeignet. Neben diesen monomeren organischen Photoleitern sind aber auch polymere Photoleiter wie polymerisierte, heterocyclische Vinylverbindungen oder solche, die aus polymeren Kondensationsprodukten von Formaldehyd und mindestens einem mehrkernigen carbocyclischen substituierten Aromaten bestehen (DE-PS 21 37 288 entsprechend US-PS 3 842 038), geeignet. Das Molekulargewicht dieser Verbindungen soll dabei einen Wert von M = 500 nicht überschreiten, da sonst die Entschichtbarkeit zunehmend schlechter wird.

Zur Erweiterung des spektralen Empfindlichkeitsbereiches ist es bekannt, Sensibilisatoren zu verwenden. Als wirksam seien beispielsweise die in den Farbstofftabellen von Schultz (7. Auflage, 1. Band, 1931) aufgeführten Farbstoffe genannt: Triarylmethanfarbstoffe, wie Brillantgrün (Nr. 760, S. 314), Viktoriablau B (Nr. 822, S. 347), Methylviolett (Nr. 783, S. 327), Kristallviolett (Nr. 785, S. 329), Säureviolett 6B (Nr. 831, S. 351); Xanthenfarbstoffe, und zwar Rhodamine, wie Rhodamin B (Nr. 864, S. 365), Rhodamin 6G (Nr. 866, S. 366), Rhodamin G extra (Nr. 865, S. 366), Sulforhodamin B (Nr. 863, S. 364) und Echtsäureeosin G (Nr. 870, S. 368); sowie Phthaleine, wie Eosin S (Nr. 883, S. 375), Eosin A (Nr. 881, S. 374), Erytrosin (Nr. 886, S. 376), Phloxin (Nr. 890, S. 378), Rose Bengale (Nr. 889, S. 378) und Fluorescein (Nr. 880, S. 373); Thiazinfarbstoffe, wie Methylenblau (Nr. 1038, S. 449); Acridinfarbstoffe, wie Acridingelb (Nr. 901, S. 383), Acridinorange (Nr. 908, S. 387) und Trypaflavin (Nr. 906, S. 386); Chinolinfarbstoffe, wie Pinacyanol (Nr. 924, S. 396) und Kryptocyanin (Nr. 927, S. 397); Chinon- und Ketonfarbstoffe, wie Alizarin (Nr. 1141, S. 499), Alizarinrot S (Nr. 1145, S. 502) und Chinizarin (Nr. 1148, S. 504); Cyaninfarbstoffe.

Viele dieser Farbstoffe zeigen in der angegebenen Form eine Vorbelichtungsempfindlichkeit, d.h. die mit ihnen sensibilisierten Schichten lassen sich nach einer ca. 12 stündigen Lagerung im Dunkeln deutlich höher aufladen, als nach einer, wenn auch nur kurzfristigen Belichtung. Um diese unerwünschte Eigenschaft zu reduzieren oder zu vermeiden, kann ein anderes Farbstoffsalz eingesetzt werden. So lässt sich die beschriebene Vorbelichtungsempfindlichkeit bei kationischen Farbstoffen, wie z.B. Rhodamin B, vermeiden, wenn statt des Chloridanions das Perchlorat- oder das Tetrafluoboratanion durch Umfällen eingeführt wird. Weitere Anionen sind z.B. p-Tosyl oder das Hexafluophosphat und andere mehr.

Weitere geeignete Farbstoffe sind zum Beispiel in der DE-PS 25 26 720 entsprechend US-PS 4 063 948 beschrieben. Alle Farbstoffe können allein oder auch in Mischungen verwendet werden. Auch eine Aktivierung mit Elektronenakzeptoren ist möglich und zum Beispiel in DE-OS 27 26 116 beschrieben. Geeignete Akzeptoren sind: Nitrofluorenon, Trinitrofluorenon, Dicyanomethylenfluoren, Dicyanomethylendinitrofluoren, Dicyanomethylenpolynitrofluoren und 3,6-Dinitronaphthalin-1,8-dicarbonsäureanhydrid.

Daneben ist eine Sensibilisierung mit dispergierten photoleitfähigen Farbstoffpigmenten möglich, wie zum Beispiel in DE-OS 21 08 939 entsprechend US-PS 3 870 516 beschrieben ist. Hier können auch anorganische Photoleiter, wie glasförmiges Selen, Selenlegierungen, Kadmiumsulfid-sulfoselenid, Zinkoxid oder die X-Form von metallfreiem Phthalocyanin und andere Farbstoffpigmente, wie zum Beispiel Perylenpigmente wie N,N'- Dimethylperylen- tetracarbonsäurediimid verwendet werden. Diese dispergierten Farbstoffpigmente werden vorzugsweise in einer Konzentration von 0,5 bis 2% eingesetzt und führen zu vorbelichtungsunempfindlichen photoleitfähigen Schichten.

Die nachfolgenden Beispiele sollen die Erfindung näher erläutern.

Darstellung des erfindungsgemässen Bindemittels:

1. Sulfonylurethan mit Propenylsulfonylisocyanat

| | |
|---|---|
| 30 g | Polyvinylbutyral mit einem Gehalt von 18–21 Gewichtsprozent freien Vinylalkoholgruppen wurden in |
| 190 g | wasserfreiem Tetrahydrofuran gelöst und |
| 18 g | Propenylsulfonylisocyanat unter Rühren zugetropft. In einer exothermen Reaktion bildete sich das Sulfonylurethan (Lösung 1, ca. 20%ig). |

2. Sulfonylurethan mit Propenylsulfonylisocyanat

| | |
|---|---|
| 30 g | Polyvinylbutyral mit einem Gehalt von 24–27 Gewichtsprozent freien Vinylalkoholgruppen wurden in |
| 210 g | wasserfreiem Tetrahydrofuran gelöst und |
| 23 g | Propenylsulfonylisocyanat unter Rühren zugetropft. In einer exothermen Reaktion bildete sich das Sulfonylurethan (Lösung 2, ca. 20%ig). |

3. Sulfonylurethan mit p-Toluolsulfonylisocyanat

| | |
|---|---|
| 30 g | Polyvinylbutyral mit einem Gehalt von 18–21 Gewichtsprozent freien Vinylalkoholgruppen wurden in |
| 220 g | wasserfreiem Tetrahydrofuran gelöst und |
| 24 g | p-Toluolsulfonylisocyanat unter Rühren zugetropft. In einer exothermen Reaktion bildete sich das Sulfonylurethan (Lösung 3, ca. 20%ig). |

4. Sulfonylurethan mit Propenylsulfonylisocyanat

| | |
|---|---|
| 25 g | eines niedermolekularen, verzweigten Polyesters mit einem Hydroxylgruppengehalt von 8% und |
| 5 g | eines niedermolekularen Polyacrylats |

mit einem Hydroxylgruppengehalt von 4,2% wurden in
190 g wasserfreiem Tetrahydrofuran gelöst und
20 g Propenylsulfonylisocyanat unter Rühren zugetropft. In einer exothermen Reaktion bildete sich das Sulfonylurethan (Lösung 5, ca. 20%ig).

5. Sulfonylurethan mit Propenylsulfonylisocyanat
30 g Celluloseacetopropionat mit einem Gehalt von 2,5% Acetyl-, 40% Propionat- und 5,5% Hydroxylgruppen wurden in
200 g wasserfreiem Tetrahydrofuran gelöst und
20 g Propenylsulfonylisocyanat unter Rühren zugetropft. In einer exothermen Reaktion bildete sich das Sulfonylurethan (Lösung 4, ca. 20%ig).

Beispiel 1
40 g 2,5-Bis-(4'-diethylaminophenyl)-oxdiazol-1,3,4 wurden in
300 g Lösung 1 gelöst.
1 g N,N'-Dimethylperylentetracarbonsäurediimid wurde mit dieser Lösung 3 Stunden in einer Kugelmühle bei Zimmertemperatur vermahlen.

Die Dispersion wurde auf einer 50 µm dicken Folie aus Polyethylenterephthalat als Zwischenträger mit einer Trockenschichtdicke von 30 µm beschichtet. Die Schicht war sehr flexibel und konnte, ohne Risse zu zeigen, um einen Zylinder von 1 cm Radius gebogen werden. Zur Herstellung einer gedruckten Schaltung wurde das Material durch Laminieren bei einer Temperatur von 95 °C vom Zwischenträger auf eine Kupfer-kaschierte Epoxidplatte übertragen. Das so erhaltene elektrophotographische Aufzeichnungsmaterial war nicht vorbelichtungsempfindlich und konnte ohne vorherige Dunkellagerung sofort eingesetzt werden. Das Material konnte mit gleichem Erfolg sowohl mit positiver als auch mit negativer Aufladung versehen werden. Nach negativer Aufladung im Dunkeln wurde die trotz der hohen Schichtdicke sehr lichtempfindliche photoleitfähige Schicht bildmässig belichtet, betonert und der bildmässig angelagerte Toner durch Wärmestrahlung fixiert. In einem anschliessenden Verfahrensschritt wurden die Teile der photoleitfähigen Schicht, die nicht von Toner bedeckt waren, durch Behandeln mit einem handelsüblichen wässrig-alkalischen, netzmittelhaltigen Entschichter bis zur Kupferschicht weggelöst. Diese Entschichtung verlief mit dem erfindungsgemässen Bindemittel besonders leicht und ermöglichte eine hohe Auflösung und damit eine hohe Packungsdichte der Leiterbahnen. Die weiteren Verfahrensschritte (Galvanisieren, Verzinnen, Strippen, Ätzen) wurden wie in der Leiterplattentechnik üblich durchgeführt und führten zu einer qualitativ hochwertigen Leiterplatte.

Beispiel 2 (Vergleichsbeispiel)
60 g eines Copolymerisates aus Styrol und Maleinsäureanhydrid und
40 g 2,5-Bis-(4'-diethylaminophenyl)-oxdiazol-1,3,4 wurden in
260 g Tetrahydrofuran gelöst.
1 g N,N'-Dimethylperylimid wurde mit dieser Lösung 3 Stunden lang in einer Kugelmühle bei Zimmertemperatur vermahlen.

Die Dispersion wurde auf einer 50 µm dicken Folie aus Polyethylenterephthalat als Zwischenträger mit einer Trockenschichtdicke von 30 µm beschichtet. Die Schicht war sehr spröde und zeigte schon bei geringer Durchbiegung der Trägerfolie deutliche Risse. Bog man die Schicht um einen Zylinder mit dem Radius 15 cm, begann sie abzuplatzen. Die photoleitfähige Schicht war nicht laminierbar. Das Material war als Leiterplattenresist nicht einsetzbar.

Beispiel 3 (Vergleichsbeispiel)
60 g eines Terpolymers aus 30% Methacrylsäure, 10% Styrol und 60% Methacrylsäureester, wie es in handelsüblichem Photopolymerresist verwendet wird, und
40 g 2,5-Bis-(4'-diethylaminophenyl)-oxdiazol-1,3,4 wurden in
260 g Tetrahydrofuran gelöst.
1 g N,N'-Dimethylperylentetracarbonsäurediimid wurde mit dieser Lösung 3 Stunden lang bei Zimmertemperatur vermahlen.

Die Dispersion wurde auf einer 50 µm dicken Folie aus Polyethylenterephthalat als Zwischenträger mit einer Trockenschichtdicke von 30 µm beschichtet. Die Schicht erwies sich als sehr spröde und sie begann schon beim Trocknen von der Trägerfolie abzuplatzen. Das Material ist für einen flexiblen elektrophotographischen Leiterplattenresist nicht einsetzbar.

Beispiel 4 (Vergleichsbeispiel)
Es wurde wie in Beispiel 1 verfahren, nur dass statt der Lösung 1 in Anpassung an Beispiel 2 der DE-OS 30 36 077 die Lösung eines Sulfonylurethans mit einem Überschuss an Propenylsulfonylisocyanat eingesetzt wurde.

30 g Polyvinylbutyral mit einem Gehalt von 18–21 Gewichtsprozent Vinylalkoholgruppen wurden in
200 g wasserfreiem Tetrahydrofuran gelöst und
24,3 g Propenylsulfonylisocyanat unter Rühren zugetropft.

Die Lösung, die zur Herstellung einer photovernetzenden Diazodruckplatte gut eingesetzt werden kann, führte zu einer elektrophotographischen Schicht mit einer sehr geringen Aufladbarkeit. Die Schicht war für elektrophotographische Zwecke ungeeignet.

Beispiel 5 (Vergleichsbeispiel)

Es wurde wie in Beispiel 1 verfahren, nur dass statt Lösung 1 in Anpassung an Beispiel 4 der DE-DS 30 36 077 die Lösung eines Sulfonylurethans, bei dem nur 20% der reaktionsfähigen Hydroxylgruppen mit Propenylsulfonylisocyanat umgesetzt wurden, eingesetzt wurde.

| | |
|---|---|
| 30 g | Polyvinylbutyral mit einem Gehalt von 27 Gewichtsprozent Vinylalkoholgruppen wurden in |
| 140 g | wasserfreiem Tetrahydrofuran gelöst und |
| 5,4 g | Propenylsulfonylisocyanat unter Rühren zugetropft. |

Während die elektrophotographischen Eigenschaften der mit dieser Lösung hergestellten Schicht sehr gut waren, konnte eine 30 µm dicke Schicht mit einem netzmittelhaltigen wässrig-alkalischen Entschichter innerhalb von 5 Minuten nicht entschichtet werden.

Beispiel 6

Es wurde wie in Beispiel 1 verfahren, nur dass statt Lösung 1 die gleiche Menge der Lösung 2 eingesetzt wurde. Die Ergebnisse waren gleichwertig.

Beispiel 7

Es wurde wie in Beispiel 1 verfahren, nur dass statt Lösung 1 die Lösung 3 eingesetzt wurde. Bis auf eine etwas langsamere Entschichtbarkeit waren die Ergebnisse gleichwertig.

Beispiel 8

Es wurde wie in Beispiel 1 verfahren, nur dass statt Lösung 1 die Lösung 4 eingesetzt wurde. Die Ergebnisse waren gleichwertig.

Beispiel 9

Es wurde wie in Beispiel 1 verfahren, nur dass statt des N,N'-Dimethylperylimid Farbstoffpigmentes ein rotfarbenes Kondensationsprodukt aus Benzothioxanthen-3,4-dicarbonsäureanhydrid und nitrosubstituiertem o-Phenylendiamin analog DE-OS 23 55 075 (= US-PS 4 028 102) eingesetzt wurde.

Die Ergebnisse waren gleichwertig.

Beispiel 10

| | |
|---|---|
| 0,3 g | Rhodamin B Perchlorat wurden in |
| 30 g | Methanol gelöst und zu einer Lösung von |
| 300 g | der Lösung 1 gegeben, in der |
| 40 g | 2,5-Bis-(4'-diethylaminophenyl)-oxdiazol-1,3,4 gelöst waren. |

Die gefärbte Lösung wurde auf eine 50 µm dikke Folie aus Polyethylenterephthalat als Zwischenträger mit einer Trockenschichtdicke von 30 µm geschichtet. Die Eigenschaften waren gleichwertig zu Beispiel 1.

Beispiel 11

| | |
|---|---|
| 1 g | Astrazonorange R (C.I. 48 040) wurden in |
| 100 g | Methanol gelöst und zu einer Lösung von |
| 40 g | 2,5-Bis-(4'-diethylaminophenyl)-oxdiazol-1,3,4 in |
| 300 g | der Lösung 1 gegeben. |

Die gefärbte Lösung wurde auf eine 50 µm dikke Folie aus Polyethylenterephthalat als Zwischenträger mit einer Trockenschichtdicke von 30 µm geschichtet. Die Schicht zeigte die gleiche gute Flexibilität und Laminierbarkeit wie in Beispiel 1. Das erhaltene Aufzeichnungsmaterial war vorbelichtungsempfindlich und musste vor der weiteren Verwendung 12 Stunden im Dunkeln gelagert werden. Es konnte anschliessend in beschriebener Weise zur Herstellung einer gedruckten Schaltung eingesetzt werden.

Beispiel 12

| | |
|---|---|
| 1,0 g | Astrazonorange R (C.I. 48 040) und |
| 0,3 g | Rhodamin B wurden in |
| 13 g | Methanol gelöst und zu einer Lösung von |
| 45 g | 2,5-Bis(4'-diethylaminophenyl)-oxdiazol-1,3,4 und |
| 10 g | eines handelsüblichen Polyvinylmethylethers (LUTONAL(R) M 40) in |
| 225 g | der Lösung 1 gegeben. |

Man erzielte damit ein Aufzeichnungsmaterial, das im blauen und grünen Spektralbereich eine hohe Photoempfindlichkeit besitzt, aber trotzdem bei Rotlicht verarbeitet werden kann. Durch den Gehalt an Polyvinylmethylether wurde eine besonders gute Flexibilität erreicht.

Die Lösung wurde auf eine 50 µm dicke Folie aus Polyethylenterephthalat als Zwischenträger mit einem Trockenschichtgewicht von 25 $g/m^2$ geschichtet. Das Material wurde durch Laminieren bei einer Temperatur von 120 °C vom Zwischenträger auf eine kupferkaschierte Platte übertragen und die Empfindlichkeit dieser Schicht, wie im nachfolgenden Beispiel 13 beschrieben, gemessen.

Beispiel 13 (Vergleichsbeispiel)

Es wurde wie in Beispiel 12 verfahren, nur dass statt der Lösung 1 die entsprechende Menge eines Copolymerisats aus 44 Mol-% n-Hexamethacrylat, 12 Mol-% Styrol, 19 Mol-% Methacrylsäure und 25 Mol-% Acrylsäure eingesetzt wurde. Die Messung der Photoempfindlichkeit der hergestellten photoleitfähigen Schichten wurde wie folgt durchgeführt:

Zur Ermittlung der Hellentladungskurven bewegte sich die Messprobe auf einem sich drehenden Teller durch eine Aufladevorrichtung hindurch zur Belichtungsstation, wo sie mit einer Xenonlampe XBO 150 der Firma Osram kontinuierlich belichtet wurde. Ein Wärmeabsorptionsglas KG 3 der Firma Schott & Gen., Mainz, und ein Neutralfilter mit 15% Transparenz waren der

Lampe vorgeschaltet. Die Lichtintensität in der Messebene lag im Bereich von 70 bis 170 $\mu W/cm^2$; sie wurde unmittelbar nach Ermittlung der Hellabfallkurve mit einem Opto-Meter Modell −80 X (United Detector Technology, Inc.) gemessen. Die Aufladungshöhe ($U_o$) und die photoinduzierte Hellabfallkurve wurden über ein Elektrometer 610 CR der Fa. Keithley Instruments, USA, durch eine transparente Sonde oszillographisch aufgezeichnet. Die Photoleiterschicht wurde durch die Aufladungshöhe in Volt ($U_o$) und diejenige Zeit (T 1/2) charakterisiert, nach der die Hälfte der Aufladung ($U_{o/2}$) erreicht ist. Das Produkt aus $T_{1/2}$ und der gemessenen Lichtintensität I ($\mu W/cm^2$) ist die Halbwertsenergie $E_{1/2}$ ($\mu J/cm^2$).

Gemäss der beschriebenen Charakterisierungsmethode wurde die Photoempfindlichkeit der Schichten bestimmt zu

| | $+U_o$ (V) | $E_{1/2}$ ($\mu J/cm^2$) |
|---|---|---|
| Material aus | 720 | 52 |
| Beispiel 12 | 690 | 30 |

Offensichtlich unterstützt das erfindungsgemässe Bindemittel den Ladungstransport durch die Schichten und ermöglicht dadurch elektrophotographische Schichten, die trotz einer grossen Schichtdicke eine hohe Lichtempfindlichkeit besitzen.

Beispiel 14

Es wurde wie in Beispiel 10 verfahren mit der Abänderung, dass statt Rhodamin B Perchlorat eine gleiche Menge Brillantgrün Fluoborat eingesetzt wurde. Man erzielte damit ein Aufzeichnungsmaterial, das mit einem He/Ne-Laser geringer Leistung belichtet werden kann.

Beispiel 15

Es wurden die Materialien von Beispiel 1 eingesetzt, nur dass die Beschichtung auf einen anodisierten und mit Polyvinylphosphonsäure vorbehandelten als Druckform geeigneten Aluminiumträger mit einer Trockenschichtdicke von 3 µm erfolgte. Das Material wurde im Dunkeln auf +400 V aufgeladen, bildmässig belichtet, betonert und der Toner an den Bildstellen durch Wärmestrahlung fixiert. Man erhielt trotz der geringen Schichtdicke ein kontrastreiches, gut deckendes Tonerbild. In dem anschliessenden Verfahrensschritt wurden die Teile der photoleitfähigen Schicht, die nicht von Toner bedeckt waren, durch Behandeln mit einem wässrig-alkalischen, netzmittelhaltigen Entschichter vollständig weggelöst. Diese Entschichtung verläuft mit dem erfindungsgemässen Bindemittel besonders leicht und ermöglicht eine hohe Auflösung.

Beispiel 16

| | |
|---|---|
| 40 g | 2,5-Bis-(4'-diethylaminophenyl)-oxdiazol-1,3,4 wurden in |
| 300 g | Lösung 5 gelöst. |
| 1 g | N,N'-Dimethylperylimid wurde mit dieser Lösung 3 Stunden bei Zimmertemperatur vermahlen. |

Die Beschichtung auf einen Druckplattenträger und die Verarbeitung erfolgten wie in Beispiel 15. Die Ergebnisse sind gleichwertig.

Beispiel 17

Es wurden die Materialien von Beispiel 10 eingesetzt mit dem Unterschied, dass die Beschichtung auf eine Druckform aus 300 µm dickem Aluminium mit einer Trockenschichtdicke von 3 µm erfolgte. Die Ergebnisse waren gleichwertig zu Beispiel 15.

Beispiel 18

Es wurden die Materialien von Beispiel 11 eingesetzt mit dem Unterschied, dass die Beschichtung auf eine Aluminiumdruckform mit einer Trockenschichtdicke von 3 µm erfolgte. Die Ergebnisse waren gleichwertig zu Beispiel 15.

Beispiel 19

Es wurden die Materialien von Beispiel 12 eingesetzt, nur dass die Beschichtung auf einer aufgerauhten Aluminiumfolie mit einer Trockenschichtdicke von 3 µm erfolgte. Die Ergebnisse waren gleichwertig zu Beispiel 15.

Beispiel 20

Es wurden die Materialien von Beispiel 14 eingesetzt mit dem Unterschied, dass die Beschichtung auf eine elektrolytisch aufgerauhte 300 µm dicke Aluminiumfolie mit einer Trockenschichtdicke von 3 µm erfolgte. Die Ergebnisse waren gleichwertig zu Beispiel 15.

Beispiel 21

Es wurden die Materialien von Beispiel 1 eingesetzt, nur dass die Lösung als Kopierlack durch spin-coating auf einer mit Kupfer kaschierten Leiterplatte mit einer Schichtdicke (trocken) von 30 µm aufgebracht wurde. Die Platte wurde 1 Stunde an der Luft vorgetrocknet und anschliessend 5 Minuten bei 110 °C nachgetrocknet. Die Weiterverarbeitung erfolgte wie in Beispiel 1 beschrieben. Die Ergebnisse waren gleichwertig zu Beispiel 1.

**Patentansprüche**

1. Elektrophotographisches Aufzeichnungsmaterial zur Herstellung einer Druckform oder einer gedruckten Schaltung aus einem Schichtträger und einer photoleitfähigen Schicht aus Photoleiter, Sensibilisator und/oder Aktivator, gegebenenfalls weiteren, die Oberflächenstruktur und/oder die Haftung verbessernden Zusätzen sowie einem hochmolekularen in alkalisch wässriger oder alkoholischer Lösung löslichen Bindemittel, dadurch gekennzeichnet, dass die photoleitfähige Schicht als Bindemittel ein Reaktionsprodukt aus einem Sulfonylisocyanat der allgemeinen Formel

$$R-SO_2-NCO,$$

mit R gleich Alkenyl mit bis zu 4 Kohlenstoffatomen oder Phenyl, das durch Alkyl mit bis zu 3 Kohlenstoffatomen substituiert sein kann,

und einem Hydroxylgruppen tragenden Polymer im Molverhältnis im Bereich von (0,5 bis 1) : 1 enthält.

2. Aufzeichnungsmaterial nach Anspruch 1, dadurch gekennzeichnet, dass das Bindemittel als Polymer ein Vinylalkoholmischpolymerisat und/oder einen Celluloseester und/oder einen Polyester enthält.

3. Aufzeichnungsmaterial nach Ansprüchen 1 und 2, dadurch gekennzeichnet, dass das Bindemittel als Polymer ein Polyvinylbutyral mit nicht umgesetzten Vinylalkoholeinheiten enthält.

4. Aufzeichnungsmaterial nach Anspruch 1, dadurch gekennzeichnet, dass das Bindemittel als Sulfonylisocyanat eine Verbindung der allgemeinen Formel enthält, in der R eine Propenyl- oder Tolyl-Gruppe ist.

5. Aufzeichnungsmaterial nach Ansprüchen 1 bis 4, dadurch gekennzeichnet, dass die photoleitfähige Schicht als Bindemittel ein Reaktionsprodukt aus Propenylsulfonylisocyanat oder p-Toluolsulfonylisocyanat und einem Vinylalkoholmischpolymerisat enthält.

6. Aufzeichnungsmaterial nach Anspruch 1, dadurch gekennzeichnet, dass die photoleitfähige Schicht als Bindemittel ein Reaktionsprodukt enthält, dessen Molverhältnis von Sulfonylisocyanat und Hydroxylgruppen tragendem Polymer im Bereich zwischen (0,8 bis 1) : 1 liegt.

7. Aufzeichnungsmaterial nach Anspruch 1, dadurch gekennzeichnet, dass die photoleitfähige Schicht als Sensibilisator einen gelösten Farbstoff enthält.

8. Aufzeichnungsmaterial nach Anspruch 7, dadurch gekennzeichnet, dass die photoleitfähige Schicht als Sensibilisator ein Perchlorat, Fluoborat, Fluophosphat oder ein p-toluolsulfonsaures Salz eines kationischen Farbstoffes enthält.

9. Aufzeichnungsmaterial nach Anspruch 1, dadurch gekennzeichnet, dass die photoleitfähige Schicht ein Farbstoffpigment dispergiert enthält.

## Revendications

1. Matériau d'enregistrement électrophotographique destiné à la confection d'une forme d'impression ou d'un circuit imprimé, constitué d'un support de couche et d'une couche photoconductrice, elle-même constituée d'un photoconducteur, d'un sensibilisateur et/ou d'un activateur, éventuellement d'autres additifs qui améliorent la structure superficielle et/ou l'adhérence, ainsi que d'un liant de poids moléculaire élevé soluble en solution aqueuse ou alcoolique alcaline, caractérisé en ce que la couche photoconductrice contient comme liant un produit de réaction d'un sulfonylisocyanate de formule générale:

$$R-SO_2-NCO,$$

R étant un groupe alcényle ayant jusqu'à 4 atomes de carbone ou un groupe phényle, qui peut être substitué par un groupe alkyle ayant jusqu'à 3 atomes de carbone, et d'un polymère portant des groupes hydroxyle dans un rapport molaire compris entre 0,5 et 1/1.

2. Matériau d'enregistrement selon la revendication 1, caractérisé en ce que le liant contient comme polymère un copolymère d'alcool vinylique et/ou un ester cellulosique et/ou un polyester.

3. Matériau d'enregistrement selon les revendications 1 et 2, caractérisé en ce que le liant contient comme polymère un polyvinylbutyral comportant des motifs alcool vinylique qui n'ont pas réagi.

4. Matériau d'enregistrement selon la revendication 1, caractérisé en ce que le liant contient comme sulfonylisocyanate un composé ayant la formule générale dans laquelle R est un groupe propényle ou tolyle.

5. Matériau d'enregistrement selon les revendications 1 à 4, caractérisé en ce que la couche photoconductrice contient comme liant un produit de réaction du propénylsulfonylisocyanate ou du p-toluènesulfonylisocyanate et d'un copolymère d'alcool vinylique.

6. Matériau d'enregistrement selon la revendication 1, caractérisé en ce que la couche photoconductrice contient comme liant un produit de réaction dont le rapport molaire du sulfonylisocyanate au polymère possédant des groupes hydroxyle est compris entre (0,8 et 1) /1.

7. Matériau d'enregistrement selon la revendication 1, caractérisé en ce que la couche photoconductrice contient comme sensibilisateur un colorant dissous.

8. Matériau d'enregistrement selon la revendication 7, caractérisé en ce que la couche photoconductrice contient comme sensibilisateur un perchlorate, un fluoborate, un fluophosphate ou un p-toluènesulfonate d'un colorant cationique.

9. Matériau d'enregistrement selon la revendication 1, caractérisé en ce que la couche photoconductrice contient un pigment colorant à l'état dispersé.

## Claims

1. An electrophotographic recording material for preparing a printing form or a printed circuit, comprising a layer support and a photoconductive layer comprised of photoconductor, sensitizer and/or activator, if appropriate further additives which improve surface texture and/or adhesion, and a high molecular weight binder which is soluble in an alkalineaqueous or alcoholic solution, wherein the photoconductive layer contains, as binder, the product of reacting a sulfonyl isocyanate of the formula

$$R-SO_2-NCO,$$

in which R denotes alkenyl having up to 4 carbon atoms, or phenyl which can be substituted by alkyl having up to 3 carbon atoms

with a hydroxyl-containing polymer in a molar ratio within the range from 0,5:1 to 1:1.

2. A recording material as claimed in claim 1, wherein the binder contains, as, polymer, a vinyl alcohol copolymer and/or an cellulose ester and/or a polyester.

3. A recording material as claimed in claims 1 and 2, wherein the binder contains, as polymer, a polyvinyl butyral having unconverted vinyl alcohol units.

4. A recording material as claimed in claim 1, wherein the binder contains, as sulfonyl isocyanate, a compound of the general formula in which R is a propenyl or tolyl group.

5. A recording material as claimed in claims 1 to 4, wherein the photoconductive layer contains, as binder, the product of reacting propenylsulfonyl isocyanate or p-toluenesulfonyl isocyanate with a vinyl alcohol copolymer.

6. A recording material as claimed in claim 1, wherein the photoconductive layer contains, as binder, a reaction product whose molar ratio of sulfonyl isocyanate to hydroxyl-containing polymer is within the range of 0.8:1 to 1:1.

7. A recording material as claimed in claim 1, wherein the photoconductive layer contains, as sensitizer, a dissolved dyestuff.

8. A recording material as claimed in claim 7, wherein the photoconductive layer contains, as sensitizer, a perchlorate, fluoroborate, fluorophosphate or a p-toluenesulfonic acid salt of a cationic dyestuff.

9. A recording material as claimed in claim 1, wherein the photoconductive layer contains a dyestuff pigment in the form of a dispersion.